Europäisches Patentamt

European Patent Office

Office européen des brevets

(11) Veröffentlichungsnummer: **0 358 870**

**A1**

(12) # EUROPÄISCHE PATENTANMELDUNG

(21) Anmeldenummer: **89112346.5**

(22) Anmeldetag: **06.07.89**

(51) Int. Cl.⁵: **B60T 15/00**

(30) Priorität: **05.09.88 DE 3830105**

(43) Veröffentlichungstag der Anmeldung:
**21.03.90 Patentblatt 90/12**

(84) Benannte Vertragsstaaten:
**DE FR IT SE**

(71) Anmelder: **KNORR-BREMSE AG**
**Moosacher Strasse 80 Postfach 401060**
**D-8000 München 40(DE)**

(72) Erfinder: **Rheindt, Kurt**
**Ludwig-Thoma-Strasse 24a**
**D-8229 Ainring-Mitterfelden(DE)**

(54) **Bremsventil für Druckluftbremsanlagen von Fahrzeugen.**

(57) Bei einem Bremsventil für Kraftfahrzeuge ist eine Gleichlaufeinrichtung für mindestens zwei durch Druckluft gespeiste Kreise eines Bremssystems vorgesehen; diese Gleichlaufeinrichtung besteht aus einem mechanisch gegen die Kraft einer Feder (51) beaufschlagbaren Anschlagelement (49), welches von einem durch den ausgesteuerten Druck des ersten Kreises beaufschlagbaren, auf das Ventilsystem des zweiten Kreises einwirkenden Kolben (25) getragen ist. Die das Anschlagelement (49) verspannende Feder (51) stützt sich an einem im Inneren des Kolbens (25) getragenen Stützring (53) ab, dessen Relativlage innerhalb des Kolbens bei Gewindeeingriff mit einem Innengewinde des Kolbens veränderbar ist. Ein mit diesem Innengewinde des Kolbens gleichfalls im Eingriff befindlicher, sich gegen die Flanken des Innengewindes verspreizender Federkörper (57) oder dgl. Spannelement wirkt gegenüber dem Stützring (53), derart, daß der Federkörper (57) bei Drehung den Stützring (53) innerhalb des Innengewindes (55) des Kolbens verschraubt und in unbetätigter Lage den Stützring durch Verspreizen gegenüber dem Innengewinde arretiert.

Fig.1

## Bremsventil für Druckluftbremsanlagen von Fahrzeugen

Die Erfindung betrifft ein Bremsventil nach dem Gattungsbegriff des Patentanspruches 1.

Bremsventile für Druckluftbremsanlagen von Fahrzeugen, insbesondere von Nutzfahrzeugen, können zur Druckluftversorgung von mehreren Bremskreisen ausgebildet sein, wobei das dem ersten Bremskreis zugeordnete Ventilsystem mechanisch betätigbar ist und das nachgeordnete zweite Ventilsystem für den zweiten Bremskreis durch einen zwischen den Ventilsystemen angeordneten Relaiskolben betätigbar ist. Um das Druckverhalten der beiden Bremskreise einander anzupassen, um also z.B. einen Gleichlauf zwischen dem ersten und dem zweiten Bremskreis herbeizuführen, sind im Relaiskolben geführte Anschlag- bzw. Mitnahmeelemente vorgesehen, welche dazu dienen, eine mechanische Zusatzkraft zur Kraft des Relaiskolbens auf das Ventilsystem des zweiten Bremskreises auszuüben.

Es sind Einstellvorrichtungen bekannt, mittels welchen derartige Gleichlaufeinrichtungen durch aus dem Bremsventil sich erstreckende Schraubelemente einstellbar sind. Nachteilig bei derartigen Anordnungen ist der bauliche Aufwand, insbesondere die Tatsache, daß die Einstelleinrichtung unbeabsichtigter Betätigung ausgesetzt sein kann, und daß der am Bremsventil vorhandene Bauraum für eventuell erforderliche Schalldämpfeinrichtungen bzw. Entlüftungsventile sehr beschränkt ist.

Davon ausgehend besteht die Aufgabe der Erfindung darin, ein Bremsventil der gattungsgemäßen Art so auszugestealten, daß die Mittel zur Einstellung der Gleichlaufeinrichtung in baulich kompakter Weise verwirklicht sind; im besonderen soll der übrige Aufbau des Bremsventils in keiner Weise beeinträchtigt sein, d.h. daß der am Bremsventil benötigte Raum für einen Schalldämpfer bzw. ein Entlüftungsventil nicht beeinträchtigt wird.

Zur Lösung dieser Aufgabe dienen die Merkmale nach dem Kennzeichnungsteil des Patentanspruches 1.

Die selbstsichernde Verstelleinrichtung ist innerhalb des ohnehin vorhandenen Freiraums innerhalb des Relaiskolbens des Bremsventils verwirklicht, so daß eine unbeabsichtigte Verstellung von vornherein ausgeschlossen ist. Es sind herkömmliche Werkzeuge verwendbar, welche z.B. nach Abnahme eines schnellöslichen Entlüftungsventils am Bremsventil in dieses einführbar sind, um den Einstellring und somit den Stützring für die Gleichlaufeinrichtung bzw. dessen vorgespannte Feder zu verdrehen. Die Höhenlage des Stützringes innerhalb des im Relaiskolben des Bremsventils vorgesehenen Innengewindes ist hierbei in einfacher Weise veränderbar. Das zwischen dem Einstellring und dem Stützring verwendete Spreiz- und Spannelement in Form eines Federkörpers ist absolut sicher im Innengewinde des Relaiskolbens geführt und kann hinsichtlich des Durchmessers so dimensioniert sein, daß es sich in Ruhelage absolut sicher gegenüber den Flanken des Innengewindes verspreizt; ein selbsttätiges Verdrehen des Federkörpers und in der Folge ein Verdrehen des Stützringes für die Feder der Gleichlaufeinrichtung ist hierdurch absolut sicher ausgeschaltet.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Fig.1 ist eine Teilschnittansicht eines als Fußbremsventil ausgebildeten Bremsventils für Druckluftbremsanlagen von Nutzfahrzeugen;

Fig.2 ist eine vergrößerte Teil- Perspektivansicht der Bestandteile der selbstsichernden Verstelleinrichtung in ihrer Position innerhalb eines schematisch angedeuteten Innengewindes des Relaiskolbens zwischen den Ventilsystemen des Bremsventils; und

Fig.3 ist eine Einzeldarstellung des Federkörpers unter Darstellung der im Schnitt wiedergegebenen Mitnehmer des Einstellrings und des Stützrings.

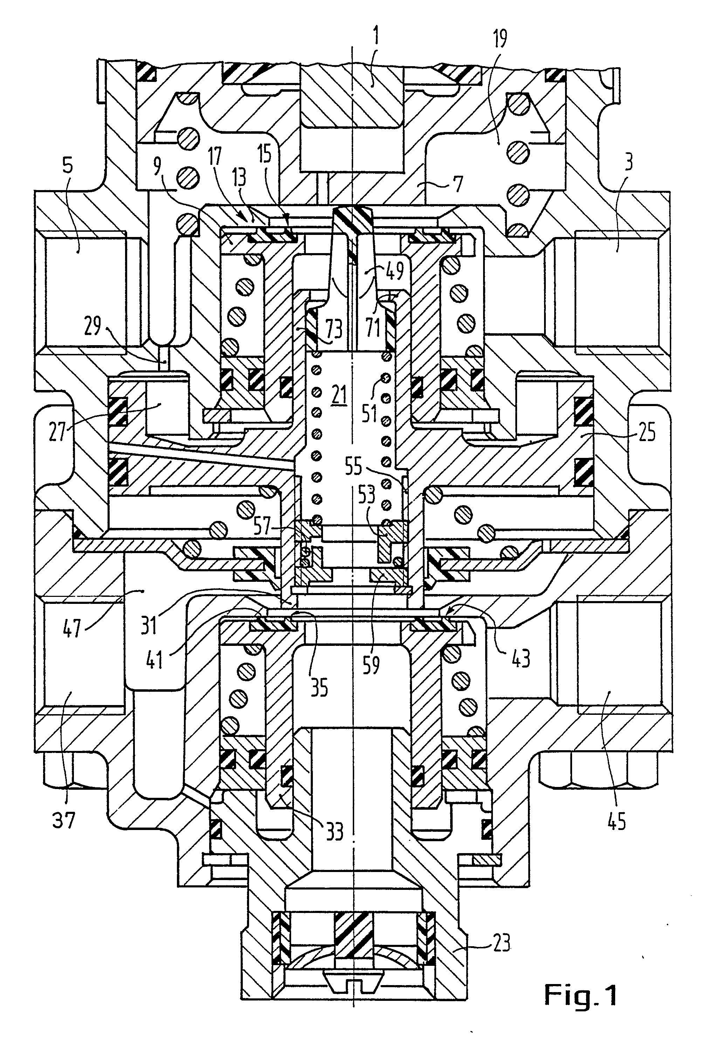

Das in Fig.1 in Teilschnittansicht wiedergegebene Ventil für druckmittelbetätigte Bremsanlagen von Kraftfahrzeugen ist nach einem Ausführungsbeispiel als Fußbremsventil ausgebildet. Das Fußbremsventil ist mittels eines Druckstückes betätigbar und dient zur Druckversorgung zweier Kreise, dem Bremskreis der Vorderachse des Fahrzeuges und dem Bremskreis der Hinterachse bzw. der Hinterachsen des Fahrzeugs. Dem ersten Bremskreis sind ein Anschluß 3 und ein Anschluß 5 am Ventil zugeordnet, wobei der Anschluß 3 an einen (nicht dargestellten) Druckluftvorrat angeschlossen ist und der Anschluß 5 mit den (nicht dargestellten) Bremszylindern oder sonstigen druckmittelbetätigten Bremsorganen für die Vorderachse des Fahrzeugs in Verbindung steht. Das Druckstück wirkt bei Betätigung mittels eines als Ventil sitz ausgebildeten Fortsatzes 7 auf einen Ventilkörper 9 ein, welcher sich in der dargestellten Lage federverspannt an einem Ventilsitz 13 abstützt. Das untere Ende des Fortsatzes 7 bildet mit dem Ventilkörper 9 einen Auslaß 15, während der Ventilkörper und der Ventilsitz 13 im Zusammenwirken einen Einlaß 17 für die am Anschluß 3 anstehende Druckluft bilden. In der in der Zeichnung wiedergegebenen Lage ist der Einlaß geschlossen und ist der Auslaß geöffnet; bei geöffnetem Auslaß steht der Anschluß 5 über die Kammer 19 mit einem Kanal 21 in Verbindung, welcher sich durch die gesamte Länge des Bremsventils erstreckt und in einem Entlüftungsventil 23 endet. In dieser Position ist die Bremsanlage des ersten Kreises entlüftet. Bei Betätigung des Druckstückes 1 legt sich der Fortsatz 7 in bekannter Weise auf das an der Oberseite des Ventilkörpers 9 befindliche Dichtelement auf und schiebt unter gleichzeitigem Schließen des Aulaßes 15 und Öffnen des Einlaßes 17 den Ventilkörper 9 gegen Federkraft nach unten gerichtet. Bei hierdurch geöffnetem Einlaß 17 gelangt Druckluft vom Anschluß 5 in die Kammer 19 und von dieser in die Bremsorgane des ersten Bremskreises. Gleichzeitig wirkt die Druckluft auf die Oberseite des Kolbens 25 ein, wobei die an der Oberseite des Kolbens 25 bestehende Kammer 27 mittels einer Bohrung 29 mit der Kammer 19 bzw. dem Anschluß 5 verbunden ist. Der Kolben 25 wirkt bei der vorbeschriebenen Druckbeaufschlagung als Relaiskolben, d.h. der bewegt sich in der Darstellung nach unten gerichtet, wobei ein an seinem unteren Ende befindlicher Fortsatz 31, als Ventilsitz wirkend, gegenüber einem Ventilkörper 33 zur Anlage gelangt. Hierdurch schließt der zwischen dem Fortsatz und dem Ventilkörper gebildete Auslaß 35, welcher den zu der Bremsanlage des zweiten Bremskreises führenden Anschluß 37 mit dem Kanal 21 im Inneren des Bremsventils verbindet. Bei Abwärtsbewegung des Ventilkörpers 33 hebt das an seiner Oberseite befindliche Dichtelement von einem dem Ventilsitz 13 vergleichbaren Ventilsitz 41 ab, d.h., daß der zwischen dem Ventilsitz und dem Ventilkörper gebildete Einlaß 43 geöffnet wird und der Vorratsdruckluft führende Anschluß 45 Druckluft in die mit dem Anschluß 37 verbundene Kammer 47 einspeist. In der Folge der Bewegungen wird somit zuerst die Bremsanlage des ersten Bremskreises und anschließend die Bremsanlage des zweiten Bremskreises mit Druckluft aus den Anschlüssen 3 und 45 versorgt. Die insoweit beschriebene Einrichtung ist von herkömmlicher Art und Wirkungsweise, weshalb auf die Beschreibung weiterer Details verzichtet werden kann.

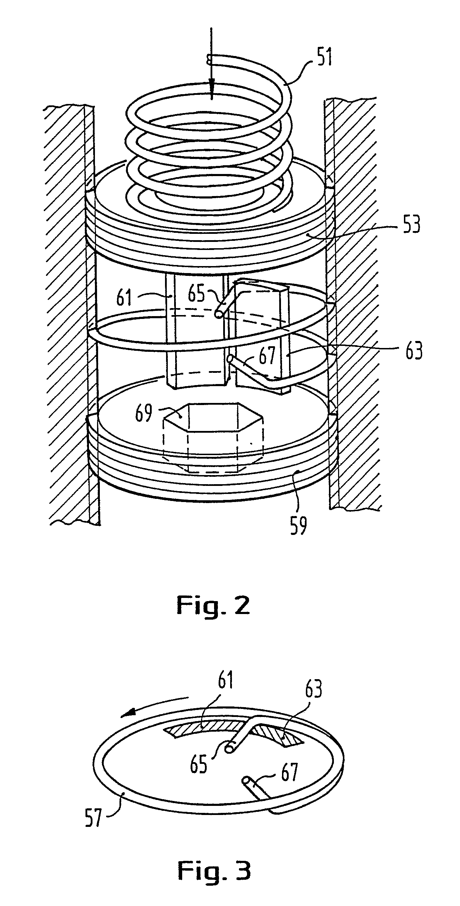

Gemäß Fig.1 ist innerhalb des Kolbens 25 ein Anschlagelement 49 geführt, welches unter der Verspannung einer Feder 51 am Fortsatz 7 der Betätigungseinrichtung des Fußbremsventils anliegt. Das Anschlagelement 49 ist als starres Teil ausgebildet und überträgt Druckkräfte über die Feder 51 auf einen Stützring 53, welcher in ein Innengewinde 55 des Kolbens 25 eingeschraubt ist. Unterhalb des Stützringes 53 befindet sich ein Federkörper 57, welcher sowohl zum Verstellen als auch zum Arretieren des Stützringes 53 dient. Wie aus der Fig.2 und 3 der Zeichnung zu ersehen ist, erstrecken sich vom Stützring 53 und vom Einstellring 59 Mitnehmer 61 bzw. 63, welche in den Federkörper 57 eingreifen. Der Mitnehmer 63 erstreckt sich zwischen zwei nach innen gebogenen Federschenkel 65 und 67, welche jeweils von den Enden des Federkörpers 57 radial nach innen abstehen, derart, daß der Mitnehmer 63 zwischen den Federschenkeln geführt ist und bei Drehung an dem einen oder anderen dieser Federschenkel zur Anlage kommt. Der Mitnehmer 61 befindet sich gemäß Darstellung in Anlage am Federschenkel 65, außerhalb des Drehraumes des Mitnehmers 63; je nach Drehrichtung kann er auch am Federschenkel 67, also etwa diametral gegenüberliegend befindlich anliegen. Der mit einem Außengewinde in das Innengewinde 55 des Kolbens 25 eingreifende Einstellring 59 besitzt beispielsweise einen Innensechskant 69 oder dergleichen Aussparung, in welcher in nachfolgend beschriebener Weise ein Werkzeug einführbar ist, um den Einstellring 59 zu drehen. Mit Hilfe der vorstehend erläuterten selbstsichernden Verstelleinrichtung ist es möglich, die Vorspannung der Feder 51 und somit die Kraft zu verändern, mit welcher das Anschlagelement 59 nach oben gerichtet ist, d.h. in Richtung der als Endanschlag dienenden Schulter 71 am Kolbenrohr 73 verspannt wird. Um den Einstellring 59 mit Hilfe eines Werkzeugs drehen zu können, ist das Auslaßventil 23 schnellöslich an der Unterseite des Bremsventils befestigt, d.h. vor dem Einführen eines Werkzeuges in das Bremsventil wird das Auslaßventil 23 entfernt. Es sind (nicht dargestellte) Mittel vorgesehen, welche die Ventileinrichtung des zweiten Bremskreises in ihrer Position halten, d.h. es bedarf nur des Abziehens des Auslaßventils 23, gegebenenfalls auch eines daran angebrachten Schalldämpfers, um in das Innere des Bremsventils zu gelangen.

Die Wirkungsweise der hinsichtlich ihrer Bauteile erläuterten Vorrichtung ist wie folgt:

Um die Axialposition des Stützrings 53 zu verändern, z.B. um den Stützring 53 in der Darstellung nach Fig.1 nach oben gerichtet zu verlagern, wird ein geeignetes Werkzeug, z.B. ein Imbus-Schlüssel in das Bremsventil eingeführt und mit dem Einstellring 59 in Eingriff gebracht. Durch Drehen des Einstellringes 59 drückt dessen Mitnehmer 63 bei Drehung gemäß Darstellung in Fig.3 gegen den Federschenkel 65 des Federkörpers 57, mit der Folge, daß sich die Wicklung des Federkörpers teilweise aus ihrem verspannenden Eingriff gegenüber dem Innengewinde 55 des Kolbens 25 lockert, und zwar in einem Maße, daß eine weitere Drehung des Einstellringes 59 und eine Mitnahme des Mitnehmers 61 im Drehsinn möglich ist. Durch die Drehung des Mitnehmers 61 dreht sich der mit ihm verbundene Stützring 53 und wird folglich innerhalb des Innengewindes 55 nach oben gerichtet verschraubt. Die Federlänge wird also gekürzt, mit anderen Worten, die Vorspannung der Feder wird erhöht. Wenn die erwünschte Position erreicht ist, kehrt der Federkörper 57 nach Beendigung des Drehvorganges wieder in seine verspannende Ausgangslage im Innengewinde zurück. In dieser Lage verspreizt er sich gegenüber dem Innengewinde, so daß ein selbsttätiges Verdrehen des Federkörpers und folglich ein weiteres Drehen des Stützrings 53 als auch des Einstellrings 59 ausgeschlossen ist. Der Federkörper 57 übernimmt somit die Aufgabe, bei Lösen der selbsttätigen Arretierung die Drehkraft des Einstellrings 59 auf den Stützring 53 zu übertragen und nach vollzogener Drehung die jeweils eingestellte Drehl age bzw. Höhenlage innerhalb des Innengewindes 55 zu arretieren.

Soll die Relativlage des Stützrings 53 in entgegengesetzter Richtung verändert, soll also der Stützring innerhalb des Kolbens 25 nach unten gefahren werden, dann wird der Stellring 59 in entgegengesetzer Richtung gedreht. Hierbei kommt der Federschenkel 67 am Mitnehmer 61 zur Anlage und dreht den Stützring 53 im Innengewinde 55 entgegengesetzt gerichtet, bis die erwünschte Lage des Stützrings erreicht ist, bis also die Vorspannung der Feder 51 um ein entsprechendes Maß gelöst wurde.

Die Erfindung ist nicht auf die dreiteilige Ausführungsform aus Stützring, Federkörper und Einstellring beschränkt. So kann an der Unterseite des Stützrings 53 ein dem Federkörper 57 vergleichbares, selbstsicherndes Element geführt sein, welches direkt durch ein Werkzeug betätigbar, d.h. aus dem Eingriff mit dem Innengewinde lösbar und zusammen mit dem Stützring 53 drehbar ist. In diesem Fall kann auf den Einstellring 59 verzichtet werden. Im Rahmen des der Erfindung eigenen Gedankens ist in jedem Fall ein selbstsicherndes, in die Gewindegänge des Innengewindes eingreifendes Element vorgesehen, welches sowohl zum Höhenverstellen des Stützringes als auch zum Sichern der Position dieses Stützringes dient.

## Bezugszeichenliste

1 Druckstück
3 Anschluß
5 Anschluß
7 Fortsatz
9 Ventilkörper
13 Ventilsitz
15 Auslaß
17 Einlaß
19 Kammer
21 Kanal
23 Entlüftungsventil
25 Kolben
27 Kammer
29 Bohrung
31 Fortsatz
33 Ventilkörper
35 Auslaß
37 Anschluß
41 Ventilsitz
43 Einlaß
45 Anschluß
47 Kammer
49 Anschlagelement
51 Feder
53 Stützring
55 Innengewinde
57 Federkörper
59 Einstellring
61 Mitnehmer
63 Mitnehmer
65 Federschenkel
67 Federschenkel
69 Innensechskant
71 Schulter
73 Kolbenrohr

## Ansprüche

1. Bremsventil für Druckluftbremsanlagen von Fahrzeugen, mit wenigstens zwei Bremskreisen, welchen eine Gleichlaufeinrichtung zur Einstellung ihres Druckverhaltens zugeordnet ist, wobei die Gleichlaufeinrichtung ein mechanisch betätigbares, vom Relaiskolben zwischen den Ventilsystemen für die Bremskreise getragenes Anschlagelement aufweist, welches unter Verspannung einer Feder steht, dadurch gekennzeichnet, daß sich die Feder (51) an einem Stützring (53) abstützt, der innerhalb des Relaiskolbens (Kolben 25) in einem Innengewinde (55) desselben höhenverstellbar geführt ist, und daß der Stützring (53) mittels eines durch ein in das Bremsventil einzuführendes Werkzeug betätigbares Verstellelement höhenverstellbar ist.

2. Bremsventil nach Anspruch 1, dadurch gekennzeichnet, daß das Verstellelement aus einem Federkörper (57) besteht, welcher an bezüglich der Feder (51) entgegengesetzer Seite des Stützrings (53) anliegend im Innengewinde (55) des Kolbens (25) verspreizt und durch ein in das Bremsventil einführbares Werkzeug im Drehsinn aus der selbstsichernden Verspreizung lösbar ist, wobei der Federkörper (57) auf einen Mitnehmer (61) des Stützrings (53) einwirkt, derart, daß bei Drehung des Federkörpers der Stützring (53) im Innengewinde (55) höhenverstellbar ist.

3. Bremsventil nach Anspruch 1 oder 2, dadurch gekennzeichnet, daß an der bezüglich des Stützrings (53) entgegengesetzten Seite des Federkörpers (57) ein mit dem Innengewinde (55) verschraubter Einstellring (59) vorgesehen ist, welcher mittels eines Mitnehmers (63) zwischen radial nach innen gebogene Federschenkel (65, 67) des Federkörpers (57) greift, derart, daß bei Drehung des Einstellrings (59) der Mitnehmer (63) an einen der Federschenkel (65, 67) anlegbar ist, und daß der Einstellring (59) einen zur Betätigung mittels eines Drehwerkzeuges dienendes Profil trägt.

4. Bremsventil nach einem der vorangehenden Ansprüche, dadurch gekennzeichnet, daß der Federkörper (57) aus einem Drahtkörper besteht, von dessen Enden die Federschenkel (65,67) radial nach innen gerichtet abstehen, derart, daß der Mitnehmer (63) in den Freiraum zwischen den Federschenkeln einführbar ist, daß der Federkörper im Innengewinde selbstsichernd verspreizt ist, und daß die Selbstsicherung durch mittels des mitnehmers (63) ausgeübtem Druck an einem der Federschenkel lösbar ist.

Fig.1

EP 0 358 870 A1

**Fig. 2**

**Fig. 3**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 000 794 (BOSCH) <br> * Seiten 1-4; Figur 1/1 * <br> --- | 1 | B 60 T 15/04 |
| A | EP-A-0 042 087 (KNORR-BREMSE) <br> * Insgesamt * <br> --- | 1 | |
| A | EP-A-0 241 437 (INDUSTRIE MAGNETI MARELLI) <br> * Seite 4, Zeile 25 - Seite 5, Zeile 29; Figur 2 * <br> ----- | 1 | |

**RECHERCHIERTE SACHGEBIETE (Int. Cl.5)**

B 60 T 15/00

Der vorliegende Recherchenbericht wurde für alle Patentansprüche erstellt

| Recherchenort | Abschlußdatum der Recherche | Prüfer |
|---|---|---|
| DEN HAAG | 07-12-1989 | HARTEVELD C.D.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument